(19) Europäisches Patentamt

European Patent Office

Office européen des brevets

(11) EP 3 187 959 A1

(12) EUROPEAN PATENT APPLICATION

(43) Date of publication:
05.07.2017 Bulletin 2017/27

(51) Int Cl.:
G05D 23/19 (2006.01)   F24D 19/10 (2006.01)
G05B 13/04 (2006.01)

(21) Application number: 16206434.9

(22) Date of filing: 22.12.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 28.12.2015 SE 1551718

(71) Applicant: Nordomatic Aktiebolag
135 26 Tyresö (SE)

(72) Inventor: RENNEL, Robert
138 34 Älta (SE)

(74) Representative: Noréns Patentbyrå AB
Box 10198
100 55 Stockholm (SE)

(54) METHOD AND SYSTEM FOR REGULATING AN INDOOR TEMPERATURE

(57)   Method for regulating the indoor temperature ($T_{in}$) in a building to a desired indoor temperature $(T_{in}^D)$, using heating/cooling elements and a heat carrier with a flow line temperature ($T_{to}$), and a return temperature ($T_{ret}$).

The invention is characterised in the following steps:

a) measuring a current flow line temperature $(T_{to}^M)$, a current return temperature $(T_{ret}^M)$, a current indoor temperature $(T_{in}^M)$ and a current outdoor temperature $(T_{out}^M)$;

b) determining a regulating function, based upon said measured temperatures, which regulating function specifies a required flow line temperature $(T_{in}^R)$ for an outdoor temperature $(T_{out}^H)$;

c) measuring the current outdoor temperature $(T_{out}^M)$ and calculating the required flow line temperature $(T_{to}^R)$;

d) while controlling, calculating an absolute difference between at least one of

i) measured indoor temperature $(T_{in}^M)$ an desired indoor temperature $(T_{in}^D)$; or

ii) measured return temperature $(T_{ret}^M)$ and an expected return temperature $(T_{ret}^E)$;

e)   in   case   said   difference   is   large,   updating   the   regulating   function. The invention also relates to a system.

EP 3 187 959 A1

# Fig. 1

**Description**

The present invention relates to a method and a system for regulating an indoor temperature, in particular in a building. More precisely, the present invention relates to such regulating when the indoor climate of a building is heated and/or cooled using one or several heating and/or cooling elements, such as radiators or floor heating.

Conventionally, the indoor temperature of buildings is regulated in a feedback loop based upon temperature measurement values, such as indoor temperature and outdoor temperature. The aim of such feedback loop is typically to reach and maintain a desired indoor temperature, which temperature may be user settable.

In order to take into consideration non-linear thermal properties of a heated or cooled building, a non-linear regulating function (a "heating curve", or its cooling-case analogy, respectively) is typically determined, specifying a relationship between an outdoor temperature and a temperature of a flow line temperature (the temperature of the heat carrier circulated to the radiators for giving off heat or cold to the indoor air).

Hence, during heating operation, when the outdoor temperature drops the heating curve specifies that the flow line temperature increases, and the opposite during cooling operation.

Such a heating curve is typically established by practical measurement and testing on the building, during which procedure one or more points on the heating curve are specified by a user after which the system is evaluated in terms of maintained indoor temperature for various outdoor temperatures. Such setting can then be performed iteratively over some time, with the goal of finally reaching a heating curve that as accurately as possible provides a desired indoor temperature.

Needless to say, such configuration takes a long time and provides suboptimal results before the configuration is finished. Also, the specified heating curve will at its best be a decent approximation of a "true" heating curve for the particular indoor climate to be heated or cooled. At its worse, the system will perform well under certain operating conditions but inferior under other operating conditions.

The present invention solves the above described problems.

Hence, the invention relates to a method for regulating the indoor temperature in a building to a desired indoor temperature, which building is heated or cooled using at least one heating or cooling element through which a heat carrier flows continuously, which heat carrier has a flow line temperature upstream of the element and a return temperature downstream of the element, wherein a required flow line temperature of said heat carrier is calculated so as to achieve said desired indoor temperature, which method is characterised in that the method comprises the steps of a) measuring a current flow line temperature and a current return temperature of the heat carrier, as well as a current indoor temperature and a current outdoor temperature; b) determining a regulating function, based upon said measured indoor temperature, said measured outdoor temperature, said measured flow line temperature and said measured return temperature, which regulating function specifies a respective required flow line temperature for a set of hypothetical measured outdoor temperatures; c) measuring the current outdoor temperature, calculating the said required flow line temperature based upon the measured current outdoor temperature and said determined regulating function, and controlling the flow line temperature accordingly; d) while performing said controlling, calculating an absolute difference between at least one of i) the currently measured indoor temperature and said desired indoor temperature; or ii) the currently measured return temperature and an expected return temperature calculated based upon the measured or required flow line temperature; in case said difference is larger than a respective predetermined value, reiterating to step b and determining an updated regulating function.

Moreover, the invention relates to a system for regulating the indoor temperature in a building to a desired indoor temperature, which building is heated or cooled using at least one heating or cooling element through which a heat carrier flows continuously, which heat carrier has a flow line temperature upstream of the element and a return temperature downstream of the element, wherein the system is arranged to calculate a required flow line temperature of said heat carrier so as to achieve said desired indoor temperature, which system is characterised in that the system is arranged to measure a current flow line temperature and a current return temperature of the heat carrier, as well as a current indoor temperature and a current outdoor temperature; in that the system is further arranged to determine a regulating function, based upon said measured indoor temperature, said measured outdoor temperature, said measured flow line temperature and said measured return temperature, which regulating function specifies a respective required flow line temperature for a set of hypothetical measured outdoor temperatures; in that the system is arranged to, during temperature regulating operation, measure the current outdoor temperature, calculate the said required flow line temperature based upon the measured current outdoor temperature and said determined regulating function, and to control the flow line temperature accordingly; in that the system is arranged to, during said temperature regulating operation, calculate an absolute difference between at least one of i) the currently measured indoor temperature and said desired indoor temperature; or ii) the currently measured return temperature and an expected return temperature calculated based upon the measured or required flow line temperature; and to, in case said difference is larger than a respective predetermined value, determining an updated regulating function and continue regulating the indoor temperature based upon the updated regulating function.

In the following, the invention will be described in detail, with reference to exemplifying embodiments of the invention and to the enclosed drawings, wherein:

Figure 1 is an overview showing a system according to the present invention;
Figure 2 is a flow diagram illustrating a method according to the present invention;
Figure 3 shows a heating curve calculated by a system according to the present invention in a first operation situation; and
Figure 4 shows a heating curve calculated by a system according to the present invention in a second operation situation.

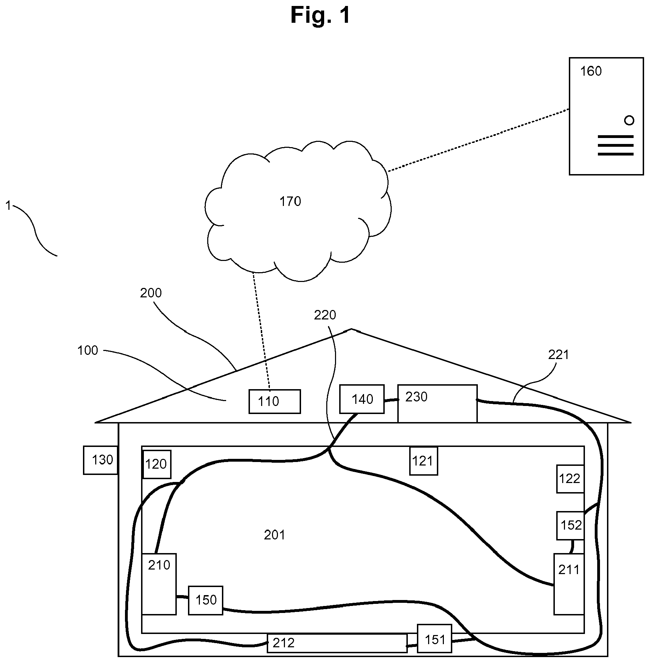

Hence, figure 1 illustrates a system 1 according to the present invention, arranged to heat and/or cool the indoor air 201 in a building 200. The shown building 200 only has one room, however it is realized that the system 1 is applicable in buildings with many interconnected and/or separated heated and/or cooled spaces, and even to larger buildings such as apartment and office buildings. Figure 1 is overall very simplified, for reasons of clarity.

The system 1 comprises an indoor air temperature $T_{in}$ control system 100, in turn comprising a control unit 110. The building 200 comprises at least one heating and/or cooling element 210, 211, 212, such as one or several radiators; heating/cooling fans; floor or roof heating or cooling elements; and so on, or a combination of such elements. Such heating and/or cooling elements are conventional as such. In figure 1, the elements are exemplified by two radiators 210, 211 and one floor heating system 212.

The invention is preferably equally applicable to cooling systems as to heating systems, and preferably also to systems arranged for selectively heating or cooling. However, in the following, "heating and/or cooling elements will simply be referred to as "heating elements".

Each heating element 210, 211, 212 is arranged to receive a liquid heat carrier, such as water, via a respective flow line 220, which heat carrier is arranged to be circulated through the heating element in question and as a result emit thermal energy, in other words heat or cold, to the indoor air 201 through heat exchange. Such heat exchange typically primarily works by radiation and convection vis-à-vis the indoor air 201 surrounding the heating element 210, 211, 212 in question. After having delivered or absorbed thermal energy, the heat carrier is then returned, via a return line 221, to the heat source 230.

The heat carrier of a particular temperature $T_{to}$ can be produced in any suitable way, such as by heat pumping, combustion of a fuel or via district heating. This is out of the scope for the present invention, which presupposes that there exists a heating and/or cooling source 230 arranged to produce a heat carrier of a certain variable/settable temperature $T_{to}$. Preferably, such source 230 is arranged in the building 200, and is arranged to be controlled by the control unit 110 using a suitable interface, using which the control unit 110 can regulate the source 230 to produce heat carrier of a certain settable temperature $T_{to}$, such that the hence tempered heat carrier can be used as the flow line 220 heat carrier, being circulated to the heating elements 210, 211, 212 at the specified flow line temperature $T_{to}$.

It is understood that the source 230 as such can comprise complex functionality, such as heating sources, valve systems, shunting functionality, and so forth, making it possible to provide said heat carrier of specified temperature $T_{to}$. The control unit 110 may also directly affect the temperature $T_{to}$ of the heat carrier by affecting temperature affecting functionality of the source 230.

The control system 100 further comprises temperature sensors 120, 121, 122 for measuring the temperature $T_{in}$ of the indoor air; temperature sensors 130 for measuring the temperature $T_{out}$ of outdoor air; temperature sensors 140 for measuring the temperature $T_{to}$ of flow line heat carrier temperature; and temperature sensors 150, 151, 152 for measuring the return line heat carrier temperature $T_{ret}$.

The control unit 110 is connected to both the temperature sensors 120, 121, 122, 130, 140, 150,151,152 and to the source 230, using conventional wired or wireless connections, such as electrical cables, WiFi or Bluetooth® connections, as the case may be.

It is preferred that the control system 100 is locally arranged in the building 200, or at least at the property at which the building 200 is located.

In some preferred embodiments, the system 1 further comprises a centrally arranged server 160, which is located at a distance from the building 200 and preferably is arranged to serve a multitude of individual, locally arranged control systems 100. In case such central server 160 is used, it is arranged to communicate with the local control system 100 via a suitable internet connection 170, such as using an existing wired or WiFi internet connection locally arranged in the building 200 and to which the control system 100 is connected.

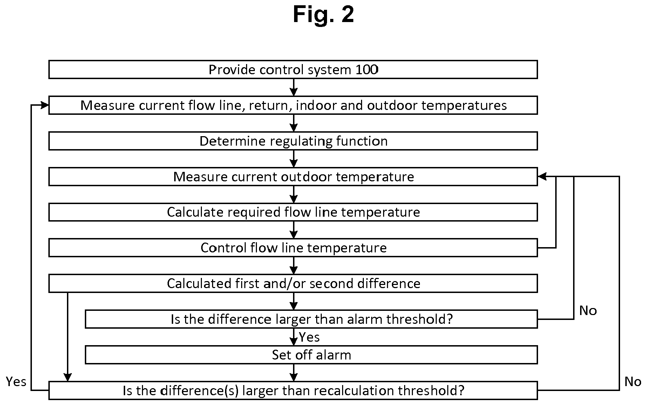

Figure 2 illustrates a method according to the invention for regulating the indoor temperature $T_{in}$ in the building 220 to a desired indoor temperature $T_{in}^{D}$. As described above, the building 200 is heated or cooled using at least one heating or cooling element 210, 211, 212, through which a heat carrier flows continuously. It is an important aspect of the present invention that the flow is continuous, as opposed to intermittent. The reason for this is that the present invention draws advantages from a modelling of the thermal properties of the heating elements 210, 211, 212 and the building 200, which modelling is performed automatically based upon, inter alia, the return temperature $T_{ret}$, as described in further detail below. In the case of intermittent heat carrier flow, for instance based upon an on/off valve regulation of the heat carrier flow through the heating elements 210, 211, 212, the automatic modelling of these thermal properties will yield significantly inferior results in terms of reliable indoor climate control.

Hence, in a first method step, the control system 100 is provided, such as installed, preferably post-installed for an existing heating and/or cooling system, which existing system then comprises the source 230 and the elements 210, 211, 212, as well as the flow line 220 and the return line 221.

As described above, during operation, the heat carrier has a flow line temperature $T_{to}$ upstream of the at least one element 210, 211, 212 and a return temperature $T_{ret}$ downstream of the at least one element 210, 211, 212.

In method according to the present invention, the system 1 is arranged to calculate a required flow line temperature $T_{to}^{R}$ of the heat carrier, which required flow line temperature $T_{to}^{R}$ is calculated with the specific aim of achieving said desired indoor temperature $T_{in}^{D}$, given the operation conditions and characteristics of the building 200, the source 230 and the system 1. This will be now be described in detail.

In a next step according to the invention, a current flow line temperature $T_{to}^{M}$, as well as a current return temperature $T_{ret}^{M}$ of the heat carrier, is measured. Further, an indoor temperature $T_{in}^{M}$ of the indoor air 201, as well as an outdoor temperature $T_{out}^{M}$ of the outdoor air, are also measured.

In a next step, a regulating function is determined, based upon the measured indoor temperature $T_{in}^{M}$, the said measured outdoor temperature $T_{out}^{M}$, the said measured flow line temperature $T_{to}^{M}$ and the said measured return temperature $T_{ret}^{M}$. The regulating function, which is preferably a function of a hypothetical outdoor temperature $T_{out}^{H}$ prevailing at the time of use of the function, as well as a desired indoor temperature $T_{in}^{D}$ which is the aim of the temperature control in the building 200, specifies a respective required flow line temperature $T_{in}^{R}$ used to achieve said desired indoor temperature $T_{in}^{D}$ for a set of such hypothetical measured outdoor temperatures $T_{out}^{H}$. This regulating function may correspond to a conventional heating curve, but is calculated based upon the said measured temperatures. It is pointed out that the regulating function may also be calculated based upon additional measured temperatures or other parameters, as the case may be, in addition to the said measured temperatures. Preferred examples are given below.

In a next step, during heating or cooling operation of the system 1, the current outdoor temperature $T_{out}^{M}$ is measured, and the required flow line temperature $T_{to}^{R}$ is calculated based upon said measured outdoor temperature $T_{out}^{M}$ and the regulating function determined in said previous step. In its simplest case, the required flow line temperature $T_{to}^{R}$ is calculated by simply selecting the flow line temperature corresponding to the measured outdoor temperature $T_{out}^{M}$ according to the regulating function. However, the required flow line temperature $T_{to}^{R}$ may also be calculated based upon additional data, such as weather forecast data supplied to the central server 160 and/or to the control unit 110 from external information providers. Preferably, the required flow line temperature $T_{to}^{R}$ is not calculated based upon the current indoors temperature $T_{in}^{M}$.

Then, the flow line temperature $T_{to}$ is controlled, by the control unit 110 controlling the source 230, so as to assume the calculated required flow line temperature $T_{to}^{R}$ value. This calculation of the required flow line temperature

$T_{to}^R$ and the control of the flow line temperature $T_{to}$ preferably takes place continuously, or at least intermittently, throughout the remainder of the method.

In a next step, which may be performed at regular intervals, such as at least once every 60 minutes, or continuously, at least one absolute temperature difference is calculated, between either

- the currently measured indoor temperature $T_{in}^M$ an the said desired indoor temperature $T_{in}^D$; or

- the currently measured return temperature $T_{ret}^M$ and an expected return temperature $T_{ret}^E$, which in turn is calculated based upon the measured $T_{to}^M$ or required $T_{to}^R$ flow line temperature.

According to one preferred embodiment, both these differences are calculated and evaluated by the system 1, equally often or at different time periods. According to an alternative embodiment, only one (either one) of these differences is calculated and evaluated by the system 1. Hence, it is envisioned that the system 1 according to the present invention, in different embodiments all covered by one and the same broad idea, is arranged to calculate and evaluate either of the following alternatives:

- the difference between the currently measured indoor temperature $T_{in}^M$ an the desired indoor temperature $T_{in}^D$, as compared to a respective threshold value for this difference;

- the difference between the currently measured return temperature $T_{ret}^M$ and the expected return temperature $T_{ret}^E$, as compared to a respective threshold value for this difference; or

- both the difference between the currently measured indoor temperature $T_{in}^M$ an the desired indoor temperature $T_{in}^D$, as compared to a respective threshold value for this difference, and the difference between the currently measured return temperature $T_{ret}^M$ and the expected return temperature $T_{ret}^E$, as compared to a respective threshold value for this difference.

Then, in a next step, for each of said calculated differences, the difference in question is evaluated. In case the difference in question is largerthan a respective predetermined value (a respective "recalculation threshold"), the method reiterates back to the step in which the temperatures $T_{in}^M$, $T_{out}^M$, $T_{to}^M$, $T_{ret}^M$ are measured and the regulating function is determined, whereby the regulating function is updated based upon updated values of the temperatures $T_{in}^M$, $T_{out}^M$, $T_{to}^M$, $T_{ret}^M$ involved.

Hence, the method according to the present invention calculates a heating function, and regulates the heating and/or cooling of the indoor air 201 based upon the calculated heating function and a currently read outdoor temperature $T_{out}^M$ with the aim of reaching a desired indoortemperature $T_{in}^D$. When either of the above described differences becomes too large, the heating function is recalculated.

Such a system 1 and method provides for a very accurate and efficient indoor temperature control, while at the same time not placing undue burden on the system 1, and in particularly not on the control system 100. Specifically, since both the measured flow line temperature $T_{to}^M$ and the measured return temperature $T_{ret}^M$ are used to calculate the heating function based upon a current state of the system 1, namely taking into consideration also $T_{in}^M$ and $T_{out}^M$, non-linear thermal properties of the system 1 and the building 200, in particular of the elements 210, 211, 212, are automatically locally modelled by the heating function, so that a small increase or decrease in the desired indoor temperature $T_{in}^D$ and/or the out-door temperature $T_{out}^M$ can be accurately countered by a corresponding change in the flow line temperature $T_{to}^R$. This local modelling is accurate as long as the temperatures do not vary too far away from their respective original values at the time of the last heating function calculations.

In practical tests of the present invention, the indoor temperature $T_{in}$ has turned out to vary only about $\pm 0.4°C$ from the desired temperature $T_{in}^D$, even during shifting sun and wind conditions, under varying internal thermal load due to usage of the building (people, machinery, etc.).

The present inventors have discovered that, depending on the detailed application, the first and/or the second above-identified difference can be used to measure how robust the currently used heating function is. When such difference becomes too large, the heating function can be recalculated using the currently prevailing temperatures with the aim of more correctly modelling the local thermal properties at that temperature combination.

The alternative, for reaching the same accurate results, would be to actually model the physical properties of the heating system in the building 200, using differential equation based physical models of thermal transfer between the heat carrier circulating through the elements 210, 211, 212 and the indoors air 201. This is considerably more computationally complicated than using the present invention, and also requires a detailed *a priori* knowledge of the physical properties of the said heating system. Furthermore, after setting up such a physical model, the actual calculations based upon that model would need to be performed continuously, as the system state progresses over time and hence changes operating point. Using the present system 1 and method, sufficiently high temperature accuracy can be achieved in a much less complicated way.

According to one preferred embodiment, the required flow line temperature $T_{to}^R$ is further calculated based upon at least one constant representing a physical property of the system 1, in particular of the heating and/or cooling system installed in the building 200. Such a constant may be a constant $K^C$ representing a convection factor for at least one of said heating elements 210, 211, 212, in particular in a predefined base state of the system 1. For radiators, $K^C$ may be set to about 1.3; for floor heating, $K^C$ may be set to about 1.0.

A constant of the said type may also be a constant $T_{free}^C$ representing additional heat and/or cool sources, apart from the said elements 210, 211, 212, present in the building 200, such as assumed thermal heat sources in the form of persons, electric equipment or such. It is realized that such different types of constants may also be further combined with, and/or replaced by, other types of constants or variables, such as an incident sunshine heating variable the value of which varies according to weather forecast data.

In particular, the required flow line temperature $T_{to}^R$, for a hypothetical outdoor temperature $T_{out}^H$ and a desired indoor temperature $T_{in}^D$, is preferably calculated using the following formula:

$$T_{to}^R(T_{out}^H, T_{in}^D) = \frac{2\left(\Delta T_{in/out}\left(\frac{1}{K^C}\right)\left(\frac{T_{to}^M + T_{ret}^M}{2} - T_{in}^M\right) + T_{in}^D\right) - \Delta T_{in/out}\frac{\Delta T_{to/ret}}{2}}{2} + \Delta T_{in/out}\frac{\Delta T_{to/ret}}{2},$$

wherein

$$\Delta T_{in/out} = \left(\frac{T_{in}^D - T_{free}^C - T_{out}^H}{T_{in}^M - T_{free}^C - T_{out}^M}\right);$$

$$\Delta T_{to/ret} = (T_{to}^M - T_{ret}^M);$$

$T_{in}^D$ = desired indoor temperature;

$K^C, T_{free}^C$ = constants;

$T_{in}^M$ = measured indoor temperature;

$T_{out}^M$ = measured outdoor temperature;

$T_{to}^M$ = measured flow line temperature; and

$T_{ret}^M$ = measured return temperature.

As described above, an absolute difference between the expected return temperature $T_{ret}^E$, in turn based upon the measured $T_{to}^M$ or required $T_{to}^R$ flow line temperature, and the measured return temperature $T_{ret}^M$, may be calculated and the difference may be compared to a predetermined value with the aim of recalculating the regulating function in case the difference is too large. In a similar way, the same absolute difference may be calculated as a control function, with the aim of detecting system 1 malfunction. Hence, the difference in question may be calculated and compared to another predetermined value (an "alarm threshold"), and if the absolute difference is larger than this other predetermined value, an alarm is activated. Upon such alarm, the user can check the heating and/or cooling system for malfunction.

It is preferred that the predetermined value for the purposes of activating the alarm is higher than a predetermined value for the purposes of recalculating the regulating function. Specifically, it is preferred that both of said recalculation thresholds are at the most 1°C, preferably at the most 0.5°C. Moreover, it is preferred that the said alarm thresholds is at the most 5°C, preferably at the most 3°C, and always at least 1°C above either of said recalculation thresholds. For each of said threshold values, it is preferred that the threshold value in question is user settable, providing a user a possibility to set the accuracy of the system 1 while at the same time striking a custom-set balance between high accuracy and regulating curve update frequency.

Furthermore, the comparison for the purposes of activating the alarm is preferably performed more frequently than the corresponding comparison for the purposes of recalculating the regulating function.

According to a preferred embodiment, the expected return temperature $T_{ret}^E$ is calculated using the following formula:

$$T_{to}^R(T_{out}^H) = \frac{2\left(\Delta T_{in/out}\left(\frac{1}{K^C}\right)\left(\frac{T_{to}^M + T_{ret}^M}{2} - T_{in}^M\right) + T_{in}^D\right) - \Delta T_{in/out}\frac{\Delta T_{to/ret}}{2}}{2},$$

wherein

$$\Delta T_{in/out} = \left(\frac{T_{in}^D - T_{free}^C - T_{out}^H}{T_{in}^M - T_{free}^C - T_{out}^M}\right);$$

$$\Delta T_{to/ret} = (T_{to}^M - T_{ret}^M);$$

$T_{in}^D$ = desired indoor temperature;

$K^C, T_{free}^C$ = constants;

$T_{in}^M$ = measured indoor temperature;

$T_{out}^M$ = measured outdoor temperature;

$T_{to}^M$ = measured flow line temperature; and

$T_{ret}^M$ = measured return temperature.

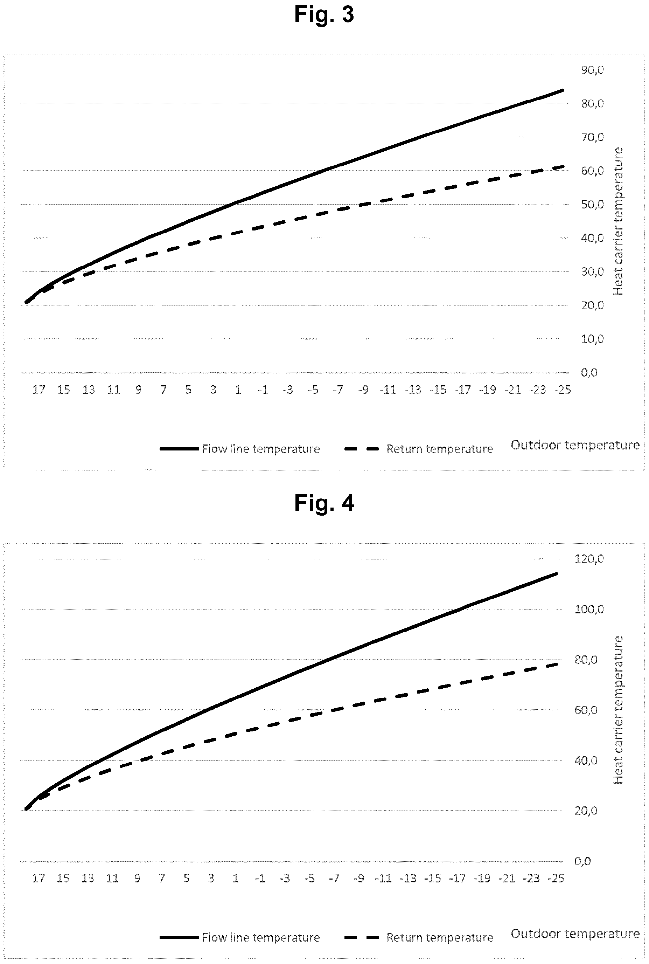

Figure 3 illustrates a regulation function which is calculated using the above defined formula, and based upon the following data:

Measured indoor temperature $T_{in}^M$ = 23.0°C

Measured outdoor temperature $T_{out}^{M}$ = -18°C;

Measured flow line temperature $T_{to}^{M}$ = 80.0°C

Measured return temperature $T_{ret}^{M}$ = 60.0°C

Desired indoor temperature $T_{in}^{D}$ = 21.0°C

Constant $K^{C}$ = 1.3

Constant $T_{free}^{C}$ = 3.0°C

Figure 4 illustrates a regulation function which is calculated in the same case, but wherein: Measured indoor temperature $T_{in}^{M}$ = 22.0°C

Measured outdoor temperature $T_{out}^{M}$ = -5°C;

According to a particularly preferred embodiment, the determination of the regulating function is performed using the above described central server 160, which in this case is arranged to receive the necessary temperature measurement values from the locally arranged control system 100. Based upon said received temperature measurement values, the central server 160 is then arranged to determine the regulating function and to transmit the determined regulating function, for instance as a set of suitable parameters, to the local control system 100 for use in the above described regulating of the indoor temperature $T_{in}$ in the building 200. Preferably, the central server 160 provides an interactive user interface, such as via a conventional web browser, via which the user can view the measured temperatures and the regulating function (preferably graphically), as well as set a desired indoor temperature $T_{in}^{M}$ and possibly also other control and/or constant parameter values relevant to the system 1. When the central server 160 calculates the regulating function, this calculation burden can be lifted off the local control system 100, which is advantageous in terms of keeping the local control system 100 simple. Also, the user, or installation/maintenance professionals, can set constants $K^{C}, T_{free}^{C}$ to suitable values, even iteratively, from a central location. Such constants, and other parameter values, may be stored on the central server 160.

In particular, it is preferred, especially when the central server 160 is used, that an updated regulating function is not determined by the central server 160 unless at least one of the above described respective differences is detected to be larger than the corresponding respective predetermined threshold value, or when a regulating function recalculation is manually triggered, such as by the user. This way, the central server 160 can be engaged only when there is an actual need for the regulating function to be updated. Then, the local control system 100 can supply the required temperature measurement values to the central server 160, which calculates the regulating function, which in turn is communicated back to the local system 100 for use during temperature regulation.

Preferably, the method according to the present invention comprises an installation step, in which an existing heating and/or cooling system in the building 200 is provided with the locally arranged control system 100, in communication connection to the central server 160. This installation step further comprises centrally setting control system 100 parameters, such as values for $K^{C}, T_{free}^{C}$ that are selected based upon a general knowledge of the building 200 to be heated and/or cooled and previous experience. Then, a first regulating function is determined as described above, and the local control system 100 starts regulating the indoor temperature $T_{in}$ based upon said regulating function, also as described above. This provides for a very rapid and simple installation, while still being able to provide adequate heating/cooling results from an early point and also being able to fine-tune the system 1 using said interactive user interface over time.

It is preferred that the indoor temperature $T_{in}^{M}$ is measured at several different locations 120, 121, 122, and that the indoor temperature $T_{in}^{M}$ used as parameter in said regulation is an average indoor temperature value based upon said several different measurements. This is illustrated in figure 1.

Also shown in figure 1 is the preferred embodiment in which the flow line temperature $T_{to}^{M}$ is measured at a location 140 along the flow line 220 upstream of any fork points for lines leading to different heating or cooling elements 210, 211, 212.

Regarding the return temperature $T_{ret}^M$, this is preferably either measured at a location along the return line 221 downstream of any fork points for lines leading from different heating or cooling elements 210, 211, 212, or alternatively at several different locations 150, 151, 152 along the return line 221 leading from different heating or cooling elements 210, 211, 212. In the latter case, which is illustrated in figure 1, the return temperature $T_{ret}^M$ is preferably calculated as an average value of said several measurement values.

Above, preferred embodiments have been described. However, it is apparent to the skilled person that many modifications can be made to the disclosed embodiments without departing from the basic idea of the invention.

For instance, it is realized that the central server 160 may serve many buildings 200, and/or many parts of one and the same building 200, in which latter case each such part is served by different local systems.

It is further realized that the present invention is equally applicable to other types of heating and/or cooling elements than radiators and floor heating/cooling systems.

Regarding the regulating function, this may be varied in different ways. Furthermore, it may take more or less details into consideration in terms of a priori knowledge of the characteristics of the building and its heating/cooling system. However, it is preferred that as little such knowledge as possible is used in the definition of the regulating function, and that instead the regulating function is designed to be auto-calibrating in terms of thermal properties of the heating/cooling system, as described above.

Hence, the invention is not limited to the described embodiments, but can be varied within the scope of the enclosed claims.

**Claims**

1. Method for regulating the indoor temperature ($T_{in}$) in a building to a desired indoor temperature $\left(T_{in}^D\right)$, which building is heated or cooled using at least one heating or cooling element through which a heat carrier flows continuously, which heat carrier has a flow line temperature ($T_{to}$) upstream of the element and a return temperature ($T_{ret}$) downstream of the element, wherein a required flow line temperature $\left(T_{to}^R\right)$ of said heat carrier is calculated so as to achieve said desired indoor temperature $\left(T_{in}^D\right)$, **characterised in that** the method comprises the steps of

   a) measuring a current flow line temperature $\left(T_{to}^M\right)$ and a current return temperature $\left(T_{ret}^M\right)$ of the heat carrier, as well as a current indoor temperature $\left(T_{in}^M\right)$ and a current outdoor temperature $\left(T_{out}^M\right)$;

   b) determining a regulating function, based upon said measured indoor temperature $\left(T_{in}^M\right)$, said measured outdoor temperature $\left(T_{out}^M\right)$, said measured flow line temperature $\left(T_{to}^M\right)$ and said measured return temperature $\left(T_{ret}^M\right)$, which regulating function specifies a respective required flow line temperature $\left(T_{in}^R\right)$ for a set of hypothetical measured outdoor temperatures $\left(T_{out}^H\right)$;

   c) measuring the current outdoor temperature $\left(T_{out}^M\right)$, calculating the said required flow line temperature $\left(T_{to}^R\right)$ based upon the measured current outdoor temperature $\left(T_{out}^M\right)$ and said determined regulating function, and controlling the flow line temperature ($T_{to}$) accordingly;

   d) while performing said controlling, calculating an expected return temperature $\left(T_{ret}^E\right)$ based upon the measured $\left(T_{to}^M\right)$ or required $\left(T_{to}^R\right)$ flow line temperature, and calculating an absolute difference between the currently measured return temperature $\left(T_{ret}^M\right)$ and said expected return temperature $\left(T_{ret}^E\right)$; and

   e) in case said difference is larger than a respective predetermined value, reiterating to step b and determining an updated regulating function.

**2.**

Method according to claim 1, **characterised in that** the required flow line temperature $\left(T_{to}^{R}\right)$ is further calculated based upon at least one constant $\left(K^{C}, T_{free}^{C}\right)$ representing a convection factor for at least one of said heating or cooling elements in a base state and/or additional heat or cool sources apart from the said element and/or apart from the said first convection factor.

**3.** Method according to claim 1 or 2, **characterised in that** the required flow line temperature $\left(T_{to}^{R}\right)$, for a hypothetical outdoor temperature $\left(T_{out}^{H}\right)$ and a desired indoor temperature $\left(T_{in}^{D}\right)$, is calculated using the following formula:

$$T_{to}^{R}(T_{out}^{H}, T_{in}^{D}) = \frac{2\left(\Delta T_{in/out}\left(\frac{1}{K^{C}}\right)\left(\frac{T_{to}^{M}+T_{ret}^{M}}{2}-T_{in}^{M}\right)+T_{in}^{D}\right)-\Delta T_{in/out}\frac{\Delta T_{to/ret}}{2}}{2} + \Delta T_{in/out}\frac{\Delta T_{to/ret}}{2},$$

wherein

$$\Delta T_{in/out} = \left(\frac{T_{in}^{D}-T_{free}^{C}-T_{out}^{H}}{T_{in}^{M}-T_{free}^{C}-T_{out}^{M}}\right);$$

$$\Delta T_{to/ret} = (T_{to}^{M} - T_{ret}^{M});$$

$T_{in}^{D}$ = desired indoor temperature;

$K^{C}, T_{free}^{C}$ = constants;

$T_{in}^{M}$ = measured indoor temperature;

$T_{out}^{M}$ = measured outdoor temperature;

$T_{to}^{M}$ = measured flow line temperature; and

$T_{ret}^{M}$ = measured return temperature.

**4.** Method according to any one of the preceding claims, **characterised in that** the method comprises the steps of, while performing said controlling, calculating the expected return temperature $\left(T_{ret}^{E}\right)$ based upon the measured $\left(T_{to}^{M}\right)$ or required $\left(T_{to}^{R}\right)$ flow line temperature, and comparing the calculated expected return temperature $\left(T_{ret}^{E}\right)$ to the measured return temperature $\left(T_{ret}^{M}\right)$, and **in that** an alarm is activated in case the absolute difference between the two is larger than a predetermined value.

**5.** Method according to claim 4, **characterised in that** the expected return temperature $\left(T_{ret}^{E}\right)$ is calculated using the following formula:

$$T_{to}^{R}(T_{out}^{H},) = \frac{2\left(\Delta T_{in/out}\left(\frac{1}{K^{C}}\right)\left(\frac{T_{to}^{M}+T_{ret}^{M}}{2}-T_{in}^{M}\right)+T_{in}^{D}\right)-\Delta T_{in/out}\frac{\Delta T_{to/ret}}{2}}{2},$$

wherein

$$\Delta T_{in/out} = \left(\frac{T_{in}^{D} - T_{free}^{C} - T_{out}^{H}}{T_{in}^{M} - T_{free}^{C} - T_{out}^{M}}\right);$$

$$\Delta T_{to/ret} = (T_{to}^{M} - T_{ret}^{M});$$

$T_{in}^{D}$ = desired indoor temperature;

$K^{C}, T_{free}^{C}$ = constants;

$T_{in}^{M}$ = measured indoor temperature;

$T_{out}^{M}$ = measured outdoor temperature;

$T_{to}^{M}$ = measured flow line temperature; and

$T_{ret}^{M}$ = measured return temperature.

6. Method according to any one of the preceding claims, **characterised in that** the method further comprises the step to, while performing said controlling, calculate an absolute difference between the currently measured indoor temperature $\left(T_{in}^{M}\right)$ and said desired indoor temperature $\left(T_{in}^{D}\right)$, and, in case the difference in question is larger than a predetermined value, reiterate to step b and determine an updated regulating function.

7. Method according to claim 6, **characterised in that** the predetermined value regarding a difference between the currently measured indoor temperature $\left(T_{in}^{M}\right)$ and the desired indoor temperature $\left(T_{in}^{D}\right)$ is at the most 1°C, preferably at the most 0.5°C.

8. Method according to any one of the preceding claims, **characterised in that** the predetermined value regarding a difference between the currently measured return temperature $\left(T_{ret}^{M}\right)$ and an expected return temperature $\left(T_{ret}^{E}\right)$ is at the most 1°C, preferably at the most 0.5°C.

9. Method according to claim 7 or 8, **characterised in that** the respective predetermined value is user settable.

10. Method according to any one of the preceding claims, **characterised in that** the determination of the regulating function is performed using a central server, arranged to receive said measurement values from a control system arranged locally at the building, to determine the regulating function and to transmit the determined regulating function to the said control system for use in said regulating of the indoor temperature ($T_{in}$) in the building.

11. Method according to claim 10, **characterised in that** an updated regulating function is not determined by the central server unless the said respective difference is detected to be larger than said respective predetermined value, or upon manual triggering.

12. Method according to any one of the preceding claims, **characterised in that** the flow line temperature $\left(T_{to}^{M}\right)$ is measured at a location along the flow line upstream of any fork points for lines leading to different heating or cooling elements.

13. Method according to any one of the preceding claims, **characterised in that** the return temperature $\left(T_{ret}^{M}\right)$ is either measured at a location along the return line downstream of any fork points for lines leading from different heating or cooling elements, or at several different locations along the return line leading from different heating or cooling elements, and **in that**, in the latter case, the return temperature $T_{ret}^{M}$ is calculated as an average value of said several measurement values.

14. System (1) for regulating the indoor temperature $\left(T_{in}\right)$ in a building to a desired indoor temperature $\left(T_{in}^{D}\right)$, which building is heated or cooled using at least one heating or cooling element through which a heat carrier flows continuously, which heat carrier has a flow line temperature $(T_{to})$ upstream of the element and a return temperature $\left(T_{ret}\right)$ downstream of the element, wherein the system (1) is arranged to calculate a required flow line temperature $\left(T_{to}^{R}\right)$ of said heat carrier so as to achieve said desired indoor temperature $\left(T_{in}^{D}\right)$, **characterised in that** the system (1) is arranged to measure a current flow line temperature $\left(T_{to}^{M}\right)$ and a current return temperature $\left(T_{ret}^{M}\right)$ of the heat carrier, as well as a current indoor temperature $\left(T_{in}^{M}\right)$ and a current outdoor temperature $\left(T_{out}^{M}\right)$; **in that** the system (1) is further arranged to determine a regulating function, based upon said measured indoor temperature $\left(T_{in}^{M}\right)$, said measured outdoor temperature $\left(T_{out}^{M}\right)$, said measured flow line temperature $\left(T_{to}^{M}\right)$ and said measured return temperature $\left(T_{ret}^{M}\right)$, which regulating function specifies a respective required flow line temperature $\left(T_{in}^{R}\right)$ for a set of hypothetical measured outdoor temperatures $\left(T_{out}^{H}\right)$; **in that** the system (1) is arranged to, during temperature regulating operation, measure the current outdoor temperature $\left(T_{out}^{M}\right)$, calculate the said required flow line temperature $\left(T_{to}^{R}\right)$ based upon the measured current outdoor temperature $\left(T_{out}^{M}\right)$ and said determined regulating function, and to control the flow line temperature $(T_{to})$ accordingly; **in that** the system (1) is arranged to, during said temperature regulating operation, calculate an expected return temperature $\left(T_{ret}^{E}\right)$ based upon the measured $\left(T_{to}^{M}\right)$ or required $\left(T_{to}^{R}\right)$ flow line temperature, and calculate an absolute difference between the currently measured return temperature $\left(T_{ret}^{M}\right)$ and said expected return temperature $\left(T_{ret}^{E}\right)$; and to, in case said difference is larger than a respective predetermined value, determining an updated regulating function and continue regulating the indoor temperature $(T_{in})$ based upon the updated regulating function.

15. System (1) according to claim 14, **characterised in that** the system (1) is further arranged to, during said temperature regulating operation, calculate an absolute difference between the currently measured indoor temperature $\left(T_{in}^{M}\right)$ and said desired indoor temperature $\left(T_{in}^{D}\right)$, and, in case the difference in question is larger than a predetermined value, determining an updated regulating function and continue regulating the indoor temperature $(T_{in})$ based upon the updated regulating function.

EP 3 187 959 A1

# Fig. 1

14

# Fig. 2

```
┌─────────────────────────────────────────────────────────────┐
│                  Provide control system 100                   │
└─────────────────────────────────────────────────────────────┘
                              ↓
┌─────────────────────────────────────────────────────────────┐
│  Measure current flow line, return, indoor and outdoor temperatures  │
└─────────────────────────────────────────────────────────────┘
                              ↓
┌─────────────────────────────────────────────────────────────┐
│                  Determine regulating function                │
└─────────────────────────────────────────────────────────────┘
                              ↓
┌─────────────────────────────────────────────────────────────┐
│                Measure current outdoor temperature            │
└─────────────────────────────────────────────────────────────┘
                              ↓
┌─────────────────────────────────────────────────────────────┐
│              Calculate required flow line temperature         │
└─────────────────────────────────────────────────────────────┘
                              ↓
┌─────────────────────────────────────────────────────────────┐
│                  Control flow line temperature                │
└─────────────────────────────────────────────────────────────┘
                              ↓
┌─────────────────────────────────────────────────────────────┐
│              Calculated first and/or second difference        │
└─────────────────────────────────────────────────────────────┘
                              ↓
┌─────────────────────────────────────────────────────────────┐
│          Is the difference larger than alarm threshold?       │
└─────────────────────────────────────────────────────────────┘
                              ↓ Yes                        No
┌─────────────────────────────────────────────────────────────┐
│                        Set off alarm                          │
└─────────────────────────────────────────────────────────────┘
                              ↓
┌─────────────────────────────────────────────────────────────┐
│    Is the difference(s) larger than recalculation threshold?  │
└─────────────────────────────────────────────────────────────┘
   Yes                                                     No
```

## Fig. 3

Flow line temperature — — Return temperature   Outdoor temperature

## Fig. 4

Flow line temperature — — Return temperature   Outdoor temperature

Europäisches
Patentamt

European
Patent Office

Office européen
des brevets

# EUROPEAN SEARCH REPORT

Application Number

EP 16 20 6434

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 487 028 A (FOYE DAVID M [US]) 11 December 1984 (1984-12-11) * the whole document * | 1-15 | INV. G05D23/19 F24D19/10 G05B13/04 |
| Y | M. ZAHEER-UDDIN: "Optimal, sub-optimal and adaptive control methods for the design of temperature controllers for intelligent buildings", BUILDING AND ENVIRONMENT, vol. 28, no. 3, 1 July 1993 (1993-07-01), pages 311-322, XP055371950, GB ISSN: 0360-1323, DOI: 10.1016/0360-1323(93)90036-3 * page 318 - page 320 * | 1-15 | |
| Y | GB 2 225 653 A (DANFOSS AS [DK]) 6 June 1990 (1990-06-06) * the whole document * | 1-15 | |
| Y | CN 103 322 645 A (UNIV ZHEJIANG TECHNOLOGY) 25 September 2013 (2013-09-25) * the whole document * | 1-15 | TECHNICAL FIELDS SEARCHED (IPC) |
| Y | EP 1 837 729 A2 (TECHEM ENERGY SERVICES GMBH [DE]) 26 September 2007 (2007-09-26) * the whole document * | 1-15 | G05D F24D G05B F24F |
| Y | US 2008/179409 A1 (SEEM JOHN E [US]) 31 July 2008 (2008-07-31) * paragraphs [0001] - [0006], [0043] - [0048]; figures 2,3 * | 1-15 | |

The present search report has been drawn up for all claims

| Place of search | Date of completion of the search | Examiner |
|---|---|---|
| Munich | 12 May 2017 | Vañó Gea, Joaquín |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 20 6434

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2017

| Patent document cited in search report | | Publication date | Patent family member(s) | | Publication date |
|---|---|---|---|---|---|
| US 4487028 | A | 11-12-1984 | CA | 1211815 A | 23-09-1986 |
| | | | US | 4487028 A | 11-12-1984 |
| GB 2225653 | A | 06-06-1990 | BE | 1002990 A3 | 15-10-1991 |
| | | | CA | 2000867 A1 | 09-05-1990 |
| | | | CH | 678887 A5 | 15-11-1991 |
| | | | DE | 3838005 A1 | 10-05-1990 |
| | | | DK | 539389 A | 10-05-1990 |
| | | | FR | 2638864 A1 | 11-05-1990 |
| | | | GB | 2225653 A | 06-06-1990 |
| | | | IT | 1238526 B | 18-08-1993 |
| | | | JP | H0827028 B2 | 21-03-1996 |
| | | | JP | H02183734 A | 18-07-1990 |
| | | | NL | 8902700 A | 01-06-1990 |
| CN 103322645 | A | 25-09-2013 | NONE | | |
| EP 1837729 | A2 | 26-09-2007 | DE | 102006013098 B3 | 22-03-2007 |
| | | | DK | 1837729 T3 | 03-08-2015 |
| | | | EP | 1837729 A2 | 26-09-2007 |
| | | | HU | E025293 T2 | 29-02-2016 |
| US 2008179409 | A1 | 31-07-2008 | US | 2008179409 A1 | 31-07-2008 |
| | | | US | 2011036108 A1 | 17-02-2011 |
| | | | US | 2012083926 A1 | 05-04-2012 |

EPO FORM P0459

For more details about this annex : see Official Journal of the European Patent Office, No. 12/82